# EUROPEAN PATENT APPLICATION

(11) **EP 1 840 432 A1**
(43) Date of publication of application: **03.10.2007**
(21) Application number: 06023977.9
(22) Date of filing: 18.11.2006
(51) Int. Cl.: F16L 9/04

(54) **Metal tube**

(30) Priority: 27.03.2006 CN 200620004278 U
(71) Applicant: Shih, Fu-Man, Sansia Township Taipei County (TW)
(72) Inventor: Shih, Fu-Man, Sansia Township Taipei County (TW)
(74) Representative: Meyer, Ludgerus

(57) **Abstract**

A metal tube includes a tubular body having at least one open end. At least one spiral wire is wound around and welded to the tubular body at the at least one open end. Thereby, the tubular body can be threadedly connected to something else at the at least one open end.

## Description

### FIELD OF THE INVENTION

The present invention relates to a metal tube and, more particularly, to a metal tube which is adapted to be threadedly connected with something else.

### BACKGROUND OF THE INVENTION

Tubes, especially pipes, are usually connected either directly or indirectly through couplers. In spite the manner they are connected, the tubes must be engraved with male or female thread at ends, such as by means of thread die or tapper.

The engraving, however, requires the tube to have a sufficiently thick wall. This increases the weight of the tube as well as the amount of material, such as metal, for making it.

Therefore, there is a need for an improved metal tube to overcome the shortcomings of the prior art.

### SUMMARY OF THE INVENTION

It is an object of the present invention to provide a metal tube which is adapted to be threadedly connected with something else while having a wall in reduced thickness.

To achieve the aforementioned objects, the present invention provides a metal tube includes a tubular body having at least one open end. At least one spiral wire is wound around and welded to the tubular body at the at least one open end. Therefore, the tubular body can be threadedly connected to something else at the at least one open end.

Other objects, advantages and novel features of this invention will become more apparent from the following detailed with the accompanying drawings.

### BRIEF DESCRIPTION OF THE DRAWINGS

Fig. 1 is an exploded perspective view of a first preferred embodiment of a metal tube in accordance with the present invention, showing a tubular body having a single open end;
Fig. 1A is a perspective view of the metal tube of Fig. 1, showing a spiral wire wound around and welded to an outer periphery of the tubular body at the single open end;
Fig. 2 is a perspective view of the metal tube of Fig. 1, showing a spiral wire wound around and welded to an inner periphery of the tubular body at the single open end;
Fig. 3 is an exploded perspective view of a second preferred embodiment of the inventive metal tube, showing the tubular body having a first open end and a second open end;
Fig. 3A is a perspective view of the metal tube of Fig. 3, showing two spiral wires both wound around and welded to the inner periphery of the tubular body at the open ends;
Fig. 3B is a perspective view of the metal tube of Fig. 3, showing two spiral wires both wound around and welded to the outer periphery of the tubular body at the open ends;
Fig. 3C is a perspective view of the metal tube of Fig. 3, showing a spiral wire wound around and welded to the outer periphery of the tubular body at the first open end and another spiral wire wound around and welded to the inner periphery of the tubular body at the second open end;
Fig. 4 is an exploded perspective view of a third preferred embodiment of the inventive metal tube; and
Fig. 4A is a perspective view of the metal tube of Fig. 4.

### DETAILED DESCRIPTION OF THE PREFERRED EMBODIMENT

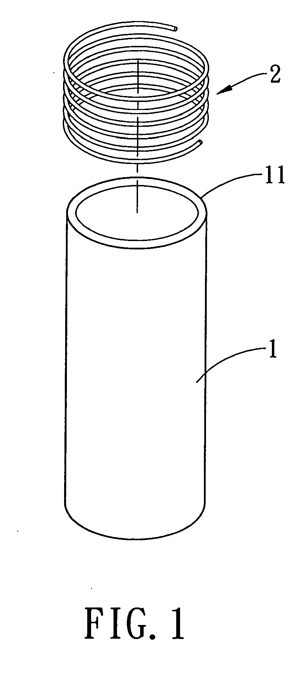

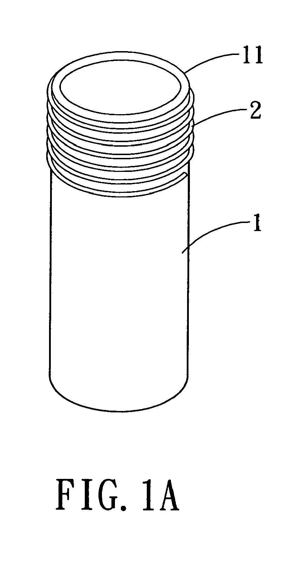

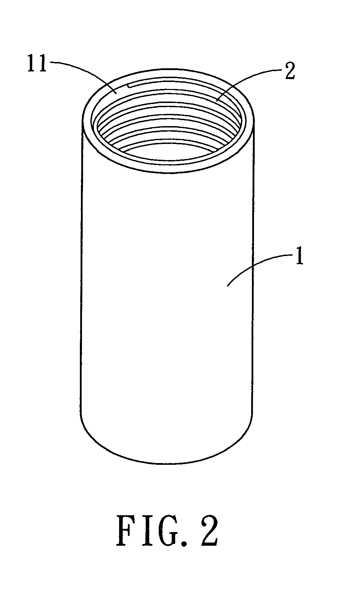

Referring to Figs. 1 and 2, there is shown a first preferred embodiment of a metal tube in accordance with the present invention. The metal tube includes a tubular body 1 having a single open end 11, with a spiral wire 2 wound around and welded to the tubular body 1 at the open end 11.

The spiral wire 2 may be wound around and welded to an outer periphery of the tubular body 1 to serve as male thread, as shown in Fig. 1A, or may be wound around and welded to an inner periphery of the tubular body 1 to serve as female thread, as shown in Fig. 2. It is in this way that the tubular body 1 can be threadedly connected with something else at the end 11.

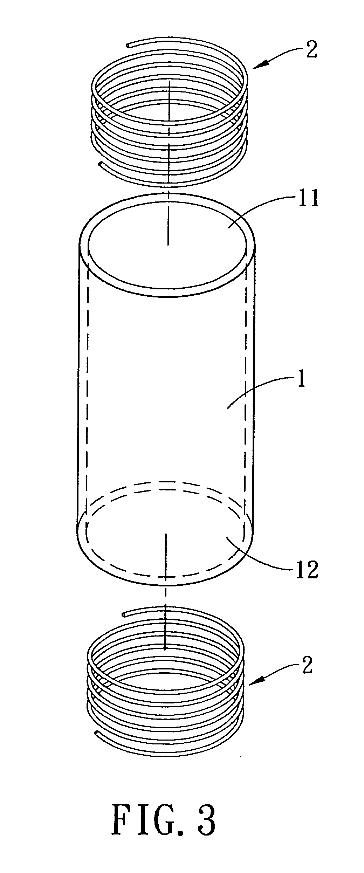

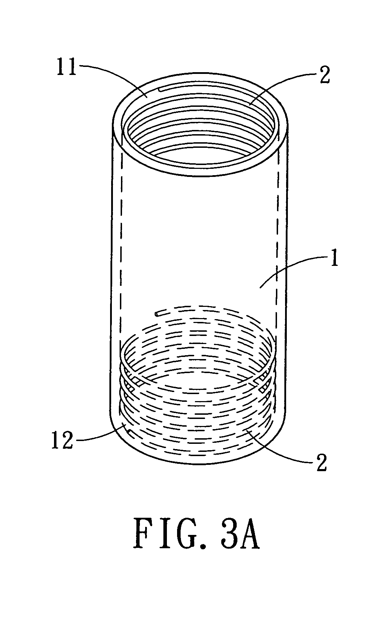

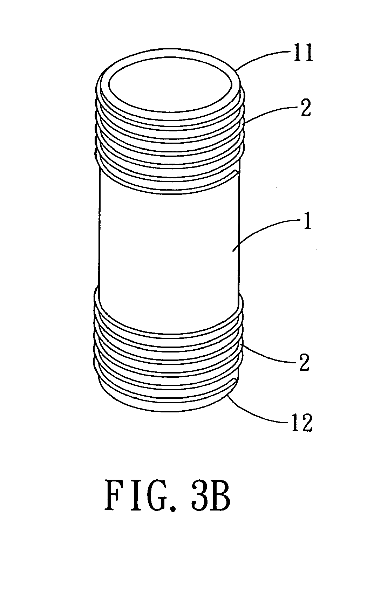

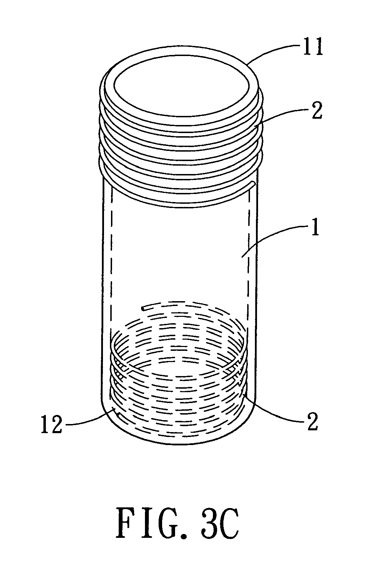

Referring to Fig. 3, a second preferred embodiment of the inventive metal tube includes a tubular body 1 having a first open end 11 and a second open end 12. Two spiral wires 2 are wound around and welded to the tubular body 1 at respective open ends 11 and 12.

In this embodiment, the spiral wires 2 are both wound around and welded to either an inner periphery of the tubular body 1, as shown in Fig. 3A, or an outer periphery of the tubular body 1, as shown in Fig. 3B, at the open ends 11 and 12. Alternatively, one of the spiral wires 2 is wound around and welded to the outer periphery of the tubular body 1 at the first open end 11, and the other of the spiral wires 2 is wound around and welded to the inner periphery of the tubular body 1 at the second open end 12, as shown in Fig. 3C.

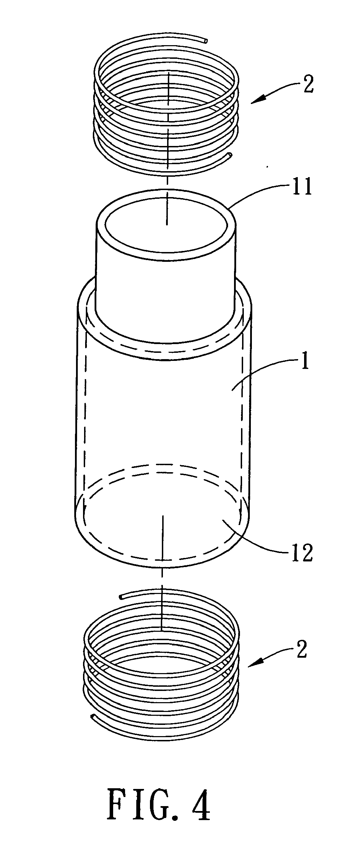

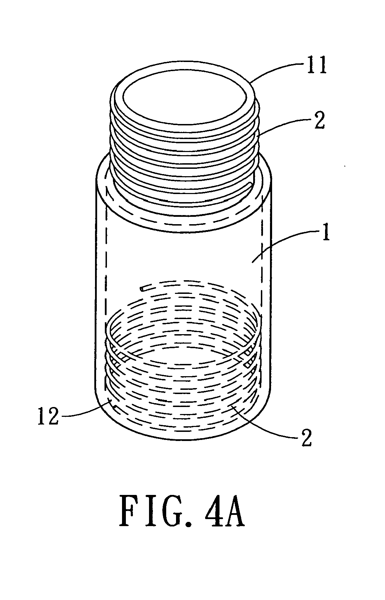

Referring to Fig. 4 and Fig. 4A, a third preferred embodiment of the inventive metal tube also includes a tubular body 1 having an first open end 11 and a second open end 12. However, the first open end 11 here is diametrically reduced in comparison with the other part of the tubular body 1. A spiral wire 2 is now wound around and welded to an outer periphery of the tubular body 1 at the first open end 11, while another spiral wire 2 is wound around and welded to an inner periphery of the tubular body 1 at the second open end 11.

From the foregoing, it is apparent that the inventive metal tube may have a thinner wall than usual one and hence requires less amount of material for making it because the spiral wires are welded to rather than cut into the tubular body as conventional male or female thread is done.

Although the embodiments together with structures and functions of the present invention have been described in detail, many modifications and variations may be made by those skilled in the art from the teachings disclosed hereinabove. Therefore, it should be understood that any modification and variation equivalent to the spirit of the present invention be regarded to fall into the scope coved by the appended claims.

## Claims

1. A metal tube comprising:
a tubular body, having at least one open end; and
at least one spiral wire, wound around and welded to said tubular body at said at least one open end;
whereby said tubular body may be threadedly connected to something else at said at least one open end.

2. The metal tube as claimed in claim 1, wherein said tubular body has a first open end and a second open end, and wherein two spiral wires are wound around and welded to said tubular body at said open ends, respectively.

3. The metal tube as claimed in claim 2, wherein said spiral wires are both wound around and welded to an outer periphery of said tubular body at said open ends.

4. The metal tube as claimed in claim 2, wherein said spiral wires are both wound around and welded to an inner periphery of said tubular body at said open ends.

5. The metal tube as claimed in claim 2, wherein one of said spiral wires is wound around and welded to an outer periphery of said tubular body at said first open end, and the other of said spiral wires is wound around and welded to an inner periphery of said tubular body at said second open end.

6. The metal tube as claimed in claim 1, wherein said open end is diametrically reduced, and where said spiral wire is wound around and welded to said tubular body at said open end.

7. The metal tube as claimed in claim 6, wherein said spiral wire is wound around and welded to an outer periphery of said tubular body at said open end.
